# EUROPÄISCHE PATENTSCHRIFT

(11) **EP 4 446 072 B1**
(45) Veröffentlichungstag und Bekanntmachung des Hinweises auf die Patenterteilung: **31.12.2025**
(21) Anmeldenummer: 24159908.3
(22) Anmeldetag: 27.02.2024
(51) Int. Cl.: B25J 15/06

(54) **SAUGGREIFER, GREIFMODUL MIT EINER MEHRZAHL VON SAUGGREIFERN SOWIE SAUGGREIFVORRICHTUNG MIT EINER MEHRZAHL VON GREIFMODULEN**
SUCTION GRIPPER, GRIPPING MODULE HAVING A PLURALITY OF SUCTION GRIPPERS, AND SUCTION GRIPPER DEVICE HAVING A PLURALITY OF GRIPPING MODULES
PINCE ASPIRANTE, MODULE DE PRÉHENSION POURVU D'UNE PLURALITÉ DE PINCES ASPIRANTES AINSI QUE DISPOSITIF DE PRÉHENSION ASPIRANTE POURVU D'UNE PLURALITÉ DE MODULES DE PRÉHENSION

(30) Priorität: 11.04.2023 DE 102023109048
(43) Veröffentlichungstag der Anmeldung: 16.10.2024
(73) Patentinhaber: J. Schmalz GmbH, 72293 Glatten (DE)
(72) Erfinder: Reinisch, Hermann, 72293 Glatten (DE); Stehle, Martin, 72401 Haigerloch (DE); Stockburger, Ralf, 72293 Glatten (DE); Frey, Matthias, 72172 Sulz-Dürrenmettstetten (DE)
(74) Vertreter: DREISS Patentanwälte PartG mbB

(56) Entgegenhaltungen:
- DE-A1- 102004 025 781
- US-A- 3 834 558

## Beschreibung

Die Erfindung betrifft einen Sauggreifer gemäß dem Oberbegriff des Anspruchs 1. Die Erfindung betrifft auch ein Greifmodul mit einer Mehrzahl von solchen Sauggreifern sowie eine Sauggreifvorrichtung mit einer Mehrzahl von Greifmodulen.

Sauggreifer der eingangs genannten Art umfassen einen Greifergrundkörper und eine Saugereinheit, welche entlang einer Hubachse verlagerbar an dem Greifergrundkörper gehaltert ist. Die Saugereinheit umfasst insbesondere einen Hubkolben und einen Saugkörper zum Ansaugen eines Gegenstands, bspw. einen Elastomersauger. Die Saugereinheit ist üblicherweise derart vorgesehen, dass sie zwischen einer axial eingefahrenen Passivkonfiguration und einer axial ausgefahrenen Aktivkonfiguration verstellbar ist, wobei eine Unterdruckversorgung des Saugkörpers in der Aktivkonfiguration freigegeben ist und in der Passivkonfiguration gesperrt ist.

Solche Sauggreifer können beispielsweise Teil eines übergeordneten Greifmoduls sein, welches eine Mehrzahl solcher Sauggreifer aufweist. Bei einem solchen Greifmodul ist es dann möglich, durch selektives Ausfahren einzelner Saugereinheiten das Greifmodul an unterschiedliche Geometrien zu greifender Gegenstände flexibel anzupassen. Dadurch, dass die Saugereinheit in der Aktivkonfiguration relativ zu der Passivkonfiguration ausgefahren sind, bilden die sich in der Passivkonfiguration befindlichen (ungenutzten) Sauggreifer keine Störkontur beim Greifen eines Gegenstands.

Um die Saugereinheit aus der Passivkonfiguration in die Aktivkonfiguration zu überführen und auch während eines Betriebs in dieser ausgefahrenen Konfiguration zu halten, ist es, bspw. aus der EP 3 483 097 A2, bekannt, die Saugereinheit mit Druckluft zu beaufschlagen. Eine solche Ausgestaltung hat jedoch den Nachteil, dass bei einem Ausfall der Druckluftversorgung, bspw. im Zuge eines Stromausfalls, die Saugereinheit nicht mehr zuverlässig in der Aktivkonfiguration gehalten ist und somit ein gegriffener Gegenstand abfallen kann.

Die vorliegende Erfindung beschäftigt sich mit der Aufgabe, bei einem Sauggreifer der eingangs genannten Art, auf energiesparende, kompakte und kostengünstige Weise eine zuverlässige Selbsthaltefunktion in der Aktivkonfiguration zu ermöglichen.

Diese Aufgabe wird erfindungsgemäß durch einen Sauggreifer mit den Merkmalen des Anspruchs 1 gelöst. Der Sauggreifer ist zum Ansaugen und Handhaben eines Gegenstands ausgebildet. Der Sauggreifer umfasst einen Greifergrundkörper mit einem, sich vorzugsweise länglich entlang einer Hubachse erstreckenden, Gehäuse. Das Gehäuse weist einen Unterdruckanschluss zum Anschluss an eine externe Unterdruckversorgung auf.

Der Sauggreifer umfasst außerdem eine Saugereinheit. Die Saugereinheit umfasst einen Hubkolben und einen mit dem Hubkolben bewegungsgekoppelten Saugkörper.

Der Hubkolben kann mehrteilig ausgebildet sein. Beispielsweise kann der Hubkolben eine oder mehrere Dichteinrichtungen, z.B. O-Ringe, aufweisen. Der Hubkolben kann auch einteilig ausgebildet sein.

Der Saugkörper ist zur Anlage an einem zu greifenden Gegenstand ausgebildet. Insofern bildet der Saugkörper bzw. eine Ansaugöffnung des Saugkörpers eine Saugstelle des Sauggreifers. Bei dem Saugkörper kann es sich bspw. um einen Elastomersauger oder Faltenbalgsauger handeln. Der Saugkörper ist vorzugsweise an einem axialen Ende des Hubkolbens angeordnet. Der Saugkörper ist vorzugsweise durch den Hubkolben hindurch mit Unterdruck versorgbar. Der Saugkörper ist vorzugsweise außerhalb des Gehäuses angeordnet.

Die Saugereinheit ist an dem Greifergrundkörper entlang einer Hubachse derart verlagerbar gehaltert, dass die Saugereinheit in einer Ausfahrrichtung und einer zu der Ausfahrrichtung entgegengesetzten Einfahrrichtung relativ zu dem Greifergrundkörper verstellbar ist. Die Saugereinheit kann eine relativ zu dem Greifergrundkörper axial eingefahrene Passivkonfiguration und eine relativ zu dem Greifergrundkörper axial ausgefahrene Aktivkonfiguration einnehmen. In der Aktivkonfiguration ist eine Strömungsverbindung zwischen dem Unterdruckanschluss und dem Saugkörper hergestellt und in der Passivkonfiguration ist diese Strömungsverbindung abgesperrt. Insofern ist eine Unterdruckversorgung des Saugkörpers in der Aktivkonfiguration freigegeben und in der Passivkonfiguration gesperrt. Insbesondere handelt es sich bei der Passivkonfiguration und der Aktivkonfiguration um Endstellungen des Hubkolbens entlang der Hubachse.

Das Gehäuse weist einen Gehäuseinnraum auf, in welchem der Hubkolben entlang der Hubachse verlagerbar geführt ist. Der Gehäuseinnenraum bildet insofern eine Art Zylinderraum für den Hubkolben. Der Gehäuseinnenraum kann einen kreisrunden Querschnitt aufweisen. Insofern kann das Gehäuse als Hohlzylinder ausgebildet sein. Der Gehäuseinnenraum kann auch einen eckigen Querschnitt aufweisen.

Der Hubkolben ist derart ausgebildet und in dem Gehäuseinnenraum derart vorgesehen, dass er den Gehäuseinnenraum in eine erste Kammer (erste Unterdruckkammer) und eine zweite Kammer (zweite Unterdruckkammer) unterteilt. Die erste Unterdruckkammer und die zweite Unterdruckkammer sind insofern zumindest abschnittsweise durch Flächenabschnitte des Hubkolbens begrenzt. Die erste Unterdruckkammer und die zweite Unterdruckkammer sind insbesondere zwischen dem Hubkolben und einer Gehäuseinnenwandung des Gehäuses ausgebildet.

Die erste Unterdruckkammer und die zweite Unterdruckkammer sind derart ausgebildet, dass sie durch Veränderung einer Verschiebestellung des Hubkolbens entlang der Hubachse in ihrer Größe veränderbar sind. Insbesondere ist ein Kammervolumen durch Veränderung einer Verschiebestellung des Hubkolbens entlang der Hubachse veränderbar.

Der Hubkolben weist eine innenliegende Unterdruckführung (Fluidführung) auf. Die Unterdruckführung kann insbesondere eine axiale, insbesondere konzentrische, Bohrung umfassen. Die Unterdruckführung ist derart ausgebildet, dass die erste Unterdruckkammer und die zweite Unterdruckkammer über die Unterdruckführung, insbesondere sowohl in der Passivkonfiguration als auch in der Aktivkonfiguration, miteinander strömungsverbunden (fluidisch verbunden) sind. Mit anderen Worten sind die erste Unterdruckkammer und die zweite Unterdruckkammer durch den Hubkolben hindurch miteinander strömungsverbunden. In beiden Kammern herrscht insofern insbesondere stets der gleiche Druck.

Der Sauggreifer ist derart ausgebildet, dass in der Aktivkonfiguration eine Strömungsverbindung zwischen den beiden Unterdruckkammern (der ersten Unterdruckkammer und der zweiten Unterdruckkammer) und dem Unterdruckanschluss hergestellt ist und in der Passivkonfiguration diese Strömungsverbindung abgesperrt ist.

Außerdem sind der Hubkolben und die beiden Unterdruckkammern derart ausgebildet, insbesondere dimensioniert, dass durch Beaufschlagen der beiden Unterdruckkammern mit Unterdruck eine Kraft auf den Hubkolben in Ausfahrrichtung wirkt. Insofern wird eine Kraftwirkung auf den Hubkolben in Ausfahrrichtung ausgeübt.

Der Hubkolben wird insofern durch die Wirkung des Unterdrucks in den Unterdruckkammern in Richtung der Aktivkonfiguration gezogen bzw. in der Aktivkonfiguration gehalten. Auf diese Weise wird eine Selbsthaltungsfunktion bereitgestellt, ohne dass es zwingend einer weiteren Aktorik, bspw. einer zusätzlichen Druckluftbeaufschlagung, bedarf, um den Sauggreifer in der Aktivkonfiguration zu halten. Die vorgeschlagene Lösung ist im Gegensatz zu den bekannten Lösungen insbesondere auch bei Wegfall einer Energieversorgung, bspw. im Zuge eines Stromausfalls, wirksam, was eine betriebssichere Funktion des Sauggreifers ermöglicht. Die Selbsthaltungsfunktion kann zusätzlich über eine Arretierung in der Aktivkonfiguration gemäß dem Kugelschreiberprinzip oder durch eine Kulisse unterstützt sein.

Vorzugsweise sind die erste Unterdruckkammer und die zweite Unterdruckkammer jeweils abschnittsweise durch Flächenabschnitte des Hubkolbens begrenzt, wobei die Flächenabschnitte Wirkflächenabschnitte bilden, auf welche ein in den beiden Unterdruckkammern vorherrschender Unterdruck wirkt. Insbesondere sind erste (Wirk)Flächenabschnitte vorgesehen, welche derart orientiert sind, dass durch Einwirken eines in den Unterdruckkammern vorherrschenden Unterdrucks auf diese ersten (Wirk)Flächenabschnitte eine Kraft auf den Hubkolben in Ausfahrrichtung wirkt, und zweite (Wirk)Flächenabschnitte, welche derart orientiert sind, dass durch Einwirken des in den Unterdruckkammern vorherrschenden Unterdrucks auf diese zweiten (Wirk)Flächenabschnitte eine Kraft auf den Hubkolben in Einfahrrichtung wirkt. Eine vorteilhafte Realisierungsform der Selbsthaltungsfunktion kann dann darin bestehen, dass eine Summe aller ersten (Wirk)Flächenabschnitte größer ist als eine Summe aller zweiten (Wirk)Flächenabschnitte, sodass netto eine Kraft in Ausfahrrichtung wirkt.

Insbesondere kann es sich bei denjenigen Flächenabschnitten des Hubkolbens, welche die erste Unterdruckkammer begrenzen, hauptsächlich um zweite Flächenabschnitte handeln, und bei denjenigen Flächenabschnitten des Hubkolbens, welche die zweite Unterdruckkammer begrenzen, hauptsächlich um erste Flächenabschnitte handeln, oder umgekehrt. Die ersten Flächenabschnitte sind insbesondere in Ausfahrrichtung orientiert, eine Flächennormale zeigt insofern insbesondere in Ausfahrrichtung. Die zweiten Flächenabschnitte sind insbesondere in Einfahrrichtung orientiert, eine Flächennormale zeigt insofern insbesondere in Einfahrrichtung. Die ersten und/oder die zweiten Flächenabschnitte können regelmäßig geformt sein, insbesondere planar. Die ersten und/oder die zweiten Flächenabschnitte können sich in einer Ebene orthogonal zur Hubachse erstrecken. Die ersten und/oder die zweiten Flächenabschnitte können auch zu der Hubachse geneigt orientiert sein. Die ersten und/oder die zweiten Flächenabschnitte können auch unregelmäßig geformt sein. Die Flächenabschnitte der gleichen Art können durch unterschiedliche Komponenten des Hubkolbens bereitgestellt sein.

Vorzugsweise sind die erste Unterdruckkammer und die zweite Unterdruckkammer derart ausgebildet, dass beim Überführen der Saugereinheit aus der Passivkonfiguration in die Aktivkonfiguration sich ein Volumen der ersten Unterdruckkammer vergrößert und sich ein Volumen der zweiten Unterdruckkammer verkleinert. Insbesondere können die erste Unterdruckkammer und die zweite Unterdruckkammer entlang der Hubachse zueinander axial versetzt angeordnet sein. Vorzugweise kann die zweite Unterdruckkammer in Ausfahrrichtung betrachtet hinter der ersten Unterdruckkammer angeordnet sein.

Die erste Unterdruckkammer kann zumindest abschnittsweise entlang der Hubachse axial versetzt zu dem Hubkolben angeordnet sein. Vorzugweise ist die erste Unterdruckkammer zwischen einem dem Saugkörper gegenüberliegenden Ende des Hubkolbens und einer Gehäuseinnenwandung des Gehäuses ausgebildet. Insofern kann durch die erste Unterdruckkammer in der Aktivkonfiguration ein Luftpolster hinter dem Hubkolben bereitgestellt sein, welches einen Kollisionsschutz beim Aufsetzen des Sauggreifers auf einen Gegenstand bildet. Auf diese Weise können sowohl Gegenstand als auch Sauggreifer geschont werden.

Es ist denkbar, dass der Saugkörper über eine eigene Unterdruckversorgungsleitung mit Unterdruck versorgbar ist. Vorzugsweise ist der Saugkörper aber durch den Hubkolben hindurch mit Unterdruck versorgbar. Eine mögliche Realisierungsform kann darin bestehen, dass die Unterdruckführung des Hubkolbens, welche die erste und die zweite Unterdruckkammer miteinander strömungsverbindet, zusätzlich eine, insbesondere axiale, Saugöffnung aufweist, welche mit dem Saugkörper strömungsverbunden ist. Bei einer solchen Ausgestaltung ist dann insbesondere keine zusätzliche Unterdruckführung für den Saugkörper erforderlich, was einen besonders kompakten und kostengünstigen Aufbau ermöglicht. Im Rahmen einer vorteilhaften Ausgestaltung kann die Unterdruckführung eine, insbesondere endständige, Saugöffnung umfassen, welche mit dem Saugkörper strömungsverbunden ist, eine Versorgungsöffnung, welche mit der ersten Unterdruckkammer strömungsverbunden ist, und eine, insbesondere radiale, Unterdrucköffnung, welche mit der zweiten Unterdruckkammer strömungsverbunden ist. Um ein Einsaugen von Gegenständen in den Hubkolben zu verhindern, kann die Saugöffnung mit einem Sieb besetzt sein.

Im Rahmen einer vorteilhaften Weiterbildung kann die erste Unterdruckkammer eine Kammeröffnung aufweisen, welche mit dem Unterdruckanschluss strömungsverbunden ist. Die Kammeröffnung kann insbesondere derart angeordnet sein, dass sie in der Passivkonfiguration der Saugereinheit durch den Hubkolben verschlossen ist. Beispielsweise ist es denkbar, dass der Hubkolben eine Dichteinrichtung, insbesondere an einem dem Saugkörper gegenüberliegenden Ende des Hubkolbens, aufweist, welche dazu ausgebildet ist, die Kammeröffnung in der Passivkonfiguration abzudichten. Auf diese Weise ist eine Unterdruckversorgung der beiden Unterdruckkammern und vorzugsweise des Saugkörpers in der Passivkonfiguration unterbunden. Die Kammeröffnung ist vorzugsweise derart angeordnet, dass sie durch Verlagerung des Hubkolbens aus der Passivkonfiguration in Ausfahrrichtung, also in Richtung Aktivkonfiguration, geöffnet wird. Insofern kann durch Verlagerung des Hubkolbens aus der Passivkonfiguration in Ausfahrrichtung eine Unterdruckversorgung der Unterdruckkammern (und somit die vorstehend beschriebene Selbsthaltefunktion) und insbesondere zusätzlich eine Unterdruckversorgung des Saugkörpers aktiviert werden.

Vorzugsweise ist die Saugereinheit in die Passivkonfiguration beaufschlagt. Insbesondere kann die Saugereinheit in einer Ausgangskonfiguration sich in der Passivkonfiguration befinden. In vorteilhafter Weise kann die Saugereinheit in die Passivkonfiguration federbeaufschlagt sein. Eine kostengünstige und zugleich in ihrer Funktion zuverlässige Realisierungsform kann beispielsweise darin bestehen, dass eine entlang der Hubachse wirkende Feder, insbesondere Druckfeder, vorgesehen ist, welche die Saugereinheit in die Passivkonfiguration beaufschlagt. Die Feder kann beispielsweise in der zweiten Unterdruckkammer angeordnet sein. Insbesondere kann die Feder den Hubkolben radial umschließen.

Bei vorteilhaften Ausgestaltungen kann das Gehäuse einen Überdruckanschluss, insbesondere Druckluftanschluss, zur Verbindung mit einer externen Überdruckversorgung, insbesondere Druckluftversorgung, aufweisen.

Im Rahmen einer vorteilhaften Weiterbildung kann der Hubkolben in dem Gehäuseinnenraum derart vorgesehen sein, dass zusätzlich zu den beiden Unterdruckkammern eine Überdruckkammer ausgebildet ist, welche mit dem Überdruckanschluss strömungsverbunden ist. Insofern kann der Hubkolben den Gehäuseinnenraum in eine erste Unterdruckkammer, eine Überdruckkammer und eine zweite Unterdruckkammer unterteilen. Dies schließt nicht aus, dass noch weitere Kammern vorgesehen sind.

Die Überdruckkammer ist vorzugsweise derart ausgebildet, dass der Hubkolben, durch Beaufschlagung der Überdruckkammer mit Druckluft, in Ausfahrrichtung, also in Richtung der Aktivkonfiguration, verlagerbar ist, insbesondere entgegen der optionalen Federbeaufschlagung. Die Druckluft kann insbesondere als Aktivierungsimpuls dienen, um die vorstehend erwähnte Kammeröffnung zu öffnen und somit Unterdruck in die Unterdruckkammern und vorzugsweise in den Saugkörper einströmen zu lassen. Dies ist insbesondere dann von Vorteil, wenn die Saugereinheit, wie vorstehend erwähnt, in die Passivkonfiguration beaufschlagt ist. Der Druckluftimpuls kann dann insbesondere zur Überwindung der Beaufschlagung dienen.

Im Rahmen einer vorteilhaften Ausgestaltung ist die Überdruckkammer entlang der Hubachse betrachtet zwischen der ersten Unterdruckkammer und der zweiten Unterdruckkammer angeordnet.

Um die Überdruckkammer gegen die Unterdruckkammern abzudichten, kann der Hubkolben eine erste Dichteinrichtung, bspw. O-Ring, umfassen, welche dazu ausgebildet ist, die erste Unterdruckkammer gegen die Überdruckkammer abzudichten, und eine zweite Dichteinrichtung, bspw. O-Ring, welche dazu ausgebildet ist, die Überdruckkammer gegen die zweite Unterdruckkammer abzudichten.

Ein besonders vorteilhafter Aufbau kann dich daraus ergeben, dass das Gehäuse einen ersten Gehäuseinnenraumabschnitt und einen, insbesondere in Ausfahrrichtung axial dahinter angeordneten, zweiten Gehäuseinnenraumabschnitt aufweist. Die beiden Gehäuseinnenraumabschnitte sind vorzugsweise miteinander verbunden.

Insbesondere kann die erste Unterdruckkammer in dem ersten Gehäuseinnenraumabschnitt ausgebildet sein und die zweite Unterdruckkammer und insbesondere die Überdruckkammer können in dem zweiten Gehäuseinnenraumabschnitt ausgebildet sein. Insbesondere stellt der erste Gehäuseinnenraumabschnitt die erste Unterdruckkammer bereit und der zweite Gehäuseinnenraumabschnitt die zweite Unterdruckkammer und insbesondere die Überdruckkammer.

Der erste und der zweite Gehäuseinnenraumabschnitt können entlang der Hubachse betrachtet die gleiche oder im wesentlichen gleiche Querschnittsfläche, insbesondere den gleichen Durchmesser, aufweisen. Besonders vorteilhaft ist es jedoch, wenn entlang der Hubachse betrachtet eine Querschnittsfläche des ersten Gehäuseinnenraumabschnitts kleiner ist als eine Querschnittsfläche des zweiten Gehäuseinnraumabschnitts, insbesondere ein Innendurchmesser des ersten Gehäuseinnenraumabschnitts kleiner ist als Innendurchmesser des zweiten Gehäuseinnenraumabschnitts. Eine solche Ausgestaltung begünstigt die vorstehend erwähnte Kraftwirkung in Ausfahrrichtung, da auf diese Weise leichter unterschiedliche Wirkflächenverhältnisse abbildbar sind.

Wie vorstehend erwähnt, können in dem zweiten Gehäuseinnenraumabschnitt die zweite Unterdruckkammer und die Überdruckkammer ausgebildet sein. Eine mögliche Realisierungsform kann darin bestehen, dass der Hubkolben abschnittsweise entlang seiner Längserstreckung eine radiale Auskragung derart aufweist, dass der zweite Gehäuseinnenraumabschnitt in die zweite Unterdruckkammer und die Überdruckkammer unterteilt ist. Die radiale Auskragung kann insofern insbesondere Flächenabschnitte bereitstellen, welche die zweite Unterdruckkammer und die Überdruckkammer abschnittsweise begrenzen. Bei einer Ausgestaltung mit Federeinrichtung, kann sich die Feder insbesondere mit einem ersten Ende an der radialen Auskragung abstützen und mit einem zweiten Ende an dem Gehäuse.

An der radialen Auskragung kann vorzugsweise eine Dichteinrichtung, insbesondere die vorstehend erwähnte zweite Dichteinrichtung, zur Abdichtung der Überdruckkammer gegen die zweite Unterdruckkammer angeordnet sein. Beispielsweise ist es denkbar, dass an der radialen Auskragung eine Nut vorgesehen ist, in welche ein Dichtelement, bspw. O-Ring, eingelegt ist.

Die zweite Unterdruckkammer und insbesondere die Überdruckkammer können den Hubkolben um die Hubachse umschließen. Insofern können die zweite Unterdruckkammer und insbesondere die Überdruckkammer als Ringkammer um die Hubachse ausgebildet sein.

Im Rahmen eines allgemeinen Aspekts kann der Sauggreifer eine Verdrehsicherungseinrichtung aufweisen, welche ein Verdrehen der Saugereinheit um die Hubachse, insbesondere ein Verdrehen des Hubkolbens um die Hubachse, blockiert.

Die vorstehend genannte Aufgabe wird auch durch ein Greifmodul, umfassend eine Mehrzahl der vorstehend beschriebenen Sauggreifern, gelöst. Das Greifmodul umfasst insbesondere einen Modulkörper, an welchem die Sauggreifer gehaltert sind. Vorzugsweise sind die Sauggreifer derart nebeneinander an dem Modulkörper gehaltert, dass die Hubachsen der Sauggreifer zueinander parallel verlaufen. Die vorstehend im Zusammenhang mit dem Sauggreifer als solchen beschriebenen Vorteile und optionalen Merkmale können auch zur Ausgestaltung des Greifmoduls dienen.

Das Greifmodul kann insbesondere eine oder mehrere Ventileinrichtungen, insbesondere eine Ventileinrichtung je Sauggreifer, zur Steuerung einer Druckluftversorgung und/oder Unterdruckversorgung aufweisen. Darüber hinaus kann das Greifmodul eine Steuereinrichtung zum Ansteuern der Ventile aufweisen. Um die Stromspitzen zu vermeiden, kann die Steuereinrichtung derart eingerichtet sein, dass sie die Ventileinrichtungen zeitlich nacheinander schaltet. Die Steuereinrichtung kann über eine drahtlose Verbindung mit einer übergeordneten Steuereinheit, bspw. eines übergeordneten Handhabungssystems, in welches das Greifmodul integriert ist, kommunizieren.

Das Greifmodul kann insbesondere einen oder mehrere Hauptunterdruckanschlüsse aufweisen, welche über ein Unterdruckverteilersystem mit den Unterdruckanschlüssen der Sauggreifer verbunden sind. Das Greifmodul kann insbesondere einen oder mehrere Hauptdruckluftanschlüsse aufweisen, welche über ein Überdruckverteilersystem mit den Überdruckanschlüssen der Sauggreifer verbunden sind. Die Hauptunterdruckanschlüsse und Hauptdruckluftanschlüsse können insbesondere an dem Modulkörper vorgesehen sein.

Die Ventileinrichtungen und/oder die Steuereinrichtung können insbesondere in dem Modulkörper vorgesehen sein. Auf diese Weise kann das Greifmodul in eine Steuerbaugruppe (Ventileinrichtung + Steuereinrichtung) und in eine Saugerbaugruppe (Sauggreifer) unterteilt sein. Im Ersatzteilfall können dann beide Baugruppen getrennt voneinander getauscht werden.

Das Greifmodul kann außerdem einen oder mehrere Sensoren umfassen. Bspw. kann jeder Sauggreifer und somit jede Saugstelle ein Sensor zugeordnet sein, über welchen die zugeordnete Saugstelle (einzeln) überwacht werden kann, bspw. hinsichtlich eines Funktionszustands (Passiv- / Aktivkonfiguration). Bei dem wenigstens einen Sensor kann es sich bspw. auch um einen Sensor zur Abstandsüberwachung oder Kollisionswarnung handeln.

Im Rahmen einer vorteilhaften Weiterbildung kann das Greifmodul zusätzlich Greifer anderer Gattungen umfassen. Beispielsweise ist es denkbar, dass das Greifmodul zusätzlich einen oder mehrere Magnetgreifer umfasst.

Die vorstehend genannte Aufgabe wird auch durch eine Sauggreifvorrichtung, umfassend eine Mehrzahl von den vorstehend beschriebenen Greifmodulen, gelöst. Die Greifmodule sind an der Sauggreifvorrichtung vorzugsweise nebeneinander angeordnet und miteinander verbunden. Beispielsweise ist es denkbar, dass die Modulkörper der Greifmodule miteinander verblockt sind. Die vorstehend im Zusammenhang mit dem Sauggreifer und dem Greifmodul als solche beschriebenen Vorteile und optionalen Merkmale können auch zur Ausgestaltung der Sauggreifvorrichtung dienen.

Die Erfindung wird im Folgenden anhand der Figuren näher erläutert. Es zeigen:
- Figur 1: skizzierte Darstellung einer Ausgestaltung eines Sauggreifers in einer Schnittansicht mit Saugereinheit in der Passivkonfiguration;
- Figur 2: skizzierte Darstellung des Sauggreifers gemäß Figur 1 in einer Schnittansicht mit Saugereinheit in der Aktivkonfiguration;
- Figur 3: skizzierte Darstellung eines Greifmoduls in einer perspektivischen Ansicht;
- Figur 4: skizzierte Darstellung des Greifmoduls gemäß Figur 3 in einer Untersicht;
- Figur 5: skizzierte Darstellung einer Sauggreifvorrichtung in einer perspektivischen Ansicht; und
- Figur 6: skizzierte Darstellung der Sauggreifvorrichtung gemäß Figur 5 in einer Seitenansicht.

In der nachfolgenden Beschreibung sowie in den Figuren sind für identische oder einander entsprechende Merkmale jeweils dieselben Bezugszeichen verwendet.

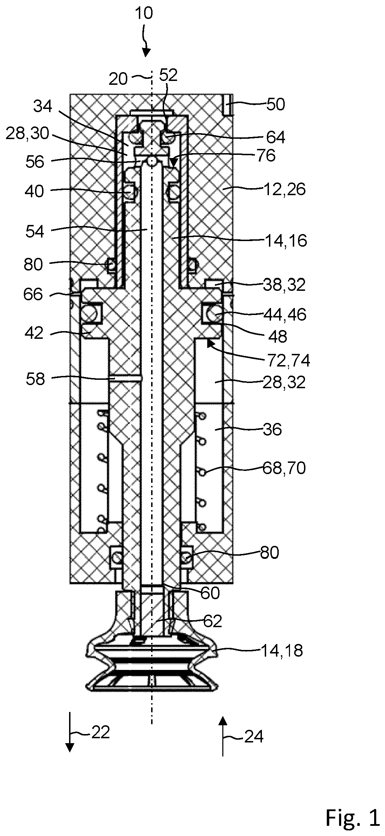

Die Figur 1 zeigt eine Ausgestaltung eines Sauggreifers, welcher insgesamt mit dem Bezugszeichen 10 bezeichnet ist. Der Sauggreifer 10 umfasst einen Greifergrundkörper 12 und einen eine Saugereinheit 14.

Die Saugereinheit 14 umfasst einen Hubkolben 16 und einen mit dem Hubkolben bewegungsgekoppelten Saugkörper 18. Die Saugereinheit 14 ist entlang einer Hubachse 20 verlagerbar an dem Greifergrundkörper 12 gehaltert und in einer Ausfahrrichtung 22 und in einer zu der Ausfahrrichtung 22 entgegengesetzten Einfahrrichtung 24 verstellbar.

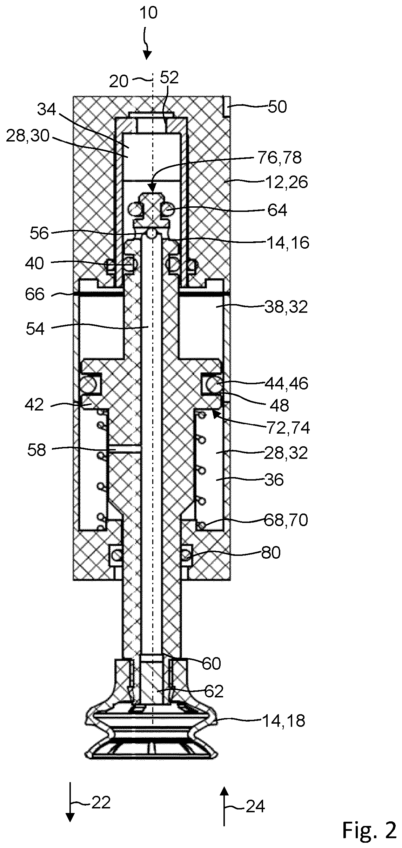

Wie nachfolgend noch im Detail erläutert, kann die Saugereinheit 14 eine Passivkonfiguration (vgl. Figur 1) und eine Aktivkonfiguration zum Ansaugen eines Gegenstands (vgl. Figur 2) einnehmen.

Wie in Figur 1 gezeigt, weist der Greifergrundkörper 12 ein Gehäuse 26 auf, welche sich beispielhaft länglich entlang der Hubsachse 20 erstreckt. Das Gehäuse 26 begrenzt einen Gehäuseinnenraum 28, in welchem der Hubkolben 16 der Saugereinheit 14 verlagerbar geführt ist. Im konkreten Beispiel weist der Gehäuseinnenraum 28 einen ersten Gehäuseinnenraumabschnitt 30 und einen in Ausfahrrichtung 22 dahinter angeordneten zweiten Gehäuseinnenraumabschnitt 32 auf. Beispielhaft und bevorzugt ist entlang der Hubachse 20 betrachtet eine Querschnittsfläche des ersten Gehäuseinnenraumabschnitts 30 kleiner als eine Querschnittsfläche des zweiten Gehäuseinnenraumabschnitts 32 (vgl. Fig. 1).

In dem dargestellten Beispiel sind der erste Gehäuseinnenraumabschnitt 30 und der zweite Gehäuseinnenraumabschnitt 32 zylindrisch ausgebildet. Bei nicht dargestellten gestellten Ausgestaltung ist es aber auch denkbar, dass der Gehäuseinnenraum 28 einen eckigen Querschnitt oder unregelmäßigen Querschnitt aufweist.

Wie in Figur 1 gezeigt, ist der Hubkolben 16 derart ausgebildet, dass der Gehäuseinnenraum 28 in eine erste Unterdruckkammer 34, eine zweite Unterdruckkammer 36 und eine zwischen erster Unterdruckkammer 34 und zweiter Unterdruckkammer 36 angeordnete Überdruckkammer 38 unterteilt ist. Wie bei einem Vergleich der Figuren 1 und 2 ersichtlich, sind die Kammern 34, 36, 38 durch Veränderung einer Verschiebestellung des Hubkolbens 16 entlang der Hubachse 20 in ihrer Größe veränderbar.

Im konkreten Beispiel trennt der Hubkolben 16 mittels einer ersten Dichteinrichtung 40 einen Bereich des ersten Gehäuseinnenraumabschnitts 30 ab, welcher Bereich die erste Unterdruckkammer 34 bildet.

In dem zweiten Gehäuseinnenraumabschnitt 32 weist der Hubkolben 16 eine radiale Auskragung 42 auf, welche den zweiten Gehäuseinnenraumabschnitt 32 in die Überdruckkammer 38 und die zweite Unterdruckkammer 36 unterteilt. Zur Abdichtung der Überdruckkammer 38 gegenüber der zweiten Unterdruckkammer 36 ist eine zweite Dichteinrichtung 44 vorgesehen. Beispielhaft ist die zweite Dichteinrichtung 44 in Form eines O-Rings 46 ausgebildet, welcher in einer Nut 48 in der radialen Auskragung 42 angeordnet ist.

Zur Versorgung des Sauggreifers 10 mit Unterdruck weist das Gehäuse 26 einen Unterdruckanschluss 50 (in den Figuren nur angedeutet) auf, welcher im Betrieb beispielsweise mit einer externen Unterdruckerzeugungseinrichtung verbunden ist.

Wie bspw. in Figur 2 gut ersichtlich, weist die erste Unterdruckkammer 34 eine Kammeröffnung 52 auf, welche mit dem Unterdruckanschluss 50 strömungsverbunden ist. Der Hubkolben 16 weist außerdem eine innenliegende Unterdruckführung 54 auf, über welche die erste Unterdruckkammer 34 mit der zweiten Unterdruckkammer 36 strömungsverbunden ist, sodass die zweite Unterdruckkammer 36 über die erste Unterdruckkammer 34 und die Unterdruckführung 54 mit Unterdruck versorgbar ist. In der ersten Unterdruckkammer 34 und in der zweiten Unterdruckkammer 36 herrscht insofern insbesondere stets der gleiche Druck.

Im konkreten weist die Unterdruckführung 54 eine Versorgungsöffnung 56 auf, welche in die erste Unterdruckkammer 34 einmündet, und eine, beispielhaft radiale, Unterdrucköffnung 58, welche in die zweite Unterdruckkammer 36 einmündet. Durch die Unterdruckführung 54 kann insofern die Überdruckkammer 38 überbrückt werden.

Beispielhaft und bevorzugt ist die Unterdruckführung 54 außerdem mit dem Saugkörper 18 strömungsverbunden, sodass der Saugkörper 18 durch die Unterdruckführung 54 hindurch mit Unterdruck versorgbar ist. Im konkreten Beispiel weist die Unterdruckführung 54 an ihrem dem Saugkörper 18 zugewandten axialen Ende eine Saugöffnung 60 auf. Beispielhaft und bevorzugt ist die Saugöffnung 60 mit einem Sieb 62 besetzt, um ein Einsaugen von Gegenständen in die Unterdruckführung 54 zu verhindern.

Wie aus den Figuren 1 und 2 ersichtlich, weist der Hubkolben 16 an seinem dem Saugkörper 18 abgewandten axialen Ende eine dritte Dichteinrichtung 64 auf, welche dazu ausgebildet ist, in der Passivkonfiguration (vgl. Figur 1) die Kammeröffnung 52 abzudichten und somit eine Unterdruckversorgung der Unterdruckkammern 34, 36 und des Saugkörpers 18 zu unterbinden. Durch Verlagerung des Hubkolbens 16 in Ausfahrrichtung 22 (vgl. Fig. 2) wird die dritte Dichteinrichtung 64 von der Kammeröffnung 52 abgehoben, sodass nun Unterdruck über den Unterdruckanschluss 50 in die erste Unterdruckkammer 34 und von dort über die Unterdruckführung 54 in die zweite Unterdruckkammer 36 und den Saugkörper 18 einströmen kann.

Wie in Figur 1 lediglich schematisch angedeutet, umfasst das Gehäuse 26 im Beispiel außerdem einen optionalen Überdruckanschluss 66, welcher mit der Überdruckkammer 38 strömungsverbunden ist. Wird die Überdruckkammer 38 mit Druckluft beaufschlagt, wirkt die Druckluft auf den Hubkolben 16, insbesondere die radiale Auskragung 42, sodass der Hubkolben 16 in Ausfahrrichtung 22 bewegt wird. Durch Beaufschlagen der Überdruckkammer 38 mit Überdruck, insbesondere Druckluft, kann insofern der Hubkolben 16 entlang der Hubachse 20 verstellt werden (nachfolgend noch näher erläutert).

Wie in den Figuren 1 und 2 dargestellt, umfasst der Sauggreifer 10 außerdem eine Federeinrichtung 68, welche dazu ausgebildet ist, den Hubkolben 16 in die Passivkonfiguration (vgl. Figur 1) zu beaufschlagen. Die Federeinrichtung 68 umfasst beispielhaft eine Druckfeder 70, welche in den Figuren nur abschnittsweise dargestellt ist. Die Druckfeder 70 ist im Beispiel in der zweiten Unterdruckkammer 36 angeordnet und stützt sich mit einem ersten Ende an einer Gehäuseinnenwandung des Gehäuses 26 ab. Mit dem zweiten Ende stützt sich die Druckfeder 70 an der radialen Auskragung 42 ab (in den Figuren ist der Übersichtlichkeit halber lediglich ein Teilabschnitt der Feder 70 gezeigt).

In der in Figur 1 dargestellten Passivkonfiguration (Ausgangskonfiguration) ist der Hubkolben durch die Feder 70 (in Figur 1 nicht vollständig gezeigt) derart in Einfahrrichtung 24 beaufschlagt, dass der Hubkolben 16 mit der dritten Dichteinrichtung 64 die Kammeröffnung 52 abdichtend an dem Gehäuse 26 anliegt. In dieser Konfiguration ist insofern eine Unterdruckzufuhr unterbunden. Wird nun die Überdruckkammer 38 zumindest kurzzeitig mit Überdruck derart beaufschlagt, dass sich der Hubkolben 16 entgegen der Federbeaufschlagung in Ausfahrrichtung 22 bewegt, wird die Kammeröffnung 52 geöffnet, sodass Unterdruck in die erste Unterdruckkammer 34 und in Folge über die Unterdruckführung 54 in die zweite Unterdruckkammer 36 und den Saugkörper 18 geleitet wird.

Wie vorstehend erwähnt, sind die Unterdruckkammern 34, 36 und der Hubkolben 16 derart bemessen, dass durch den in den Unterdruckkammern 34, 36 dann vorliegenden Unterdruck eine Kraft in Ausfahrrichtung 22 auf den Hubkolben 16 wirkt.

Im Beispiel ist dies dadurch realisiert, dass der Hubkolben erste Flächenabschnitte 72 aufweist, welche derart orientiert sind, durch Einwirken des in den Unterdruckkammern 34, 36 vorherrschenden Unterdrucks auf die ersten Flächenabschnitte 72 eine Kraft auf den Hubkolben 16 in Ausfahrrichtung 22 wirkt. Im Beispiel sind solche erste Flächenabschnitte 72 beispielsweise durch die axialen Stirnflächen 74 der radialen Auskragung 42 gebildet, welche die zweite Unterdruckkammer 36 begrenzen.

Außerdem sind zweite Flächenabschnitte 76 vorgesehen, welche derart orientiert sind, dass durch Einwirken des in den Unterdruckkammern 34, 36 vorherrschenden Unterdrucks auf die zweiten Flächenabschnitte 76 eine Kraft auf den Hubkolben 16 in Einfahrrichtung 22 wirkt. Im Beispiel sind solche zweite Flächenabschnitte 76 beispielsweise durch die axialen Stirnfläche 78 des Hubkolbens 16 (vgl. Fig. 2) gebildet, welche die erste Unterdruckkammer 34 begrenzen.

Eine Summe aller ersten Flächenabschnitte 72 ist dabei größer als eine Summe aller zweiten Flächenabschnitte 76, sodass netto eine Kraft in Ausfahrrichtung 22 wirkt. Diese Kraft ist insofern einer Kraft infolge der Beaufschlagung mittels Druckluft überlagert. Insbesondere ist es nach einem ersten Aktivierungsimpuls durch die Druckluft (zum Abheben der dritten Dichteinrichtung 64 von der Kammeröffnung 52) nicht mehr zwingend erforderlich, die Druckluftversorgung aufrecht zu erhalten, um die Saugereinheit 14 in die Aktivkonfiguration zu überführen und dort zu halten.

Um eine Leckage von Unterdruck zu verhindern, sind im Beispiel optionale weitere Dichteinrichtungen 80 vorgesehen, welche den Hubkolben 16 gegenüber dem Gehäuse 26 abdichten.

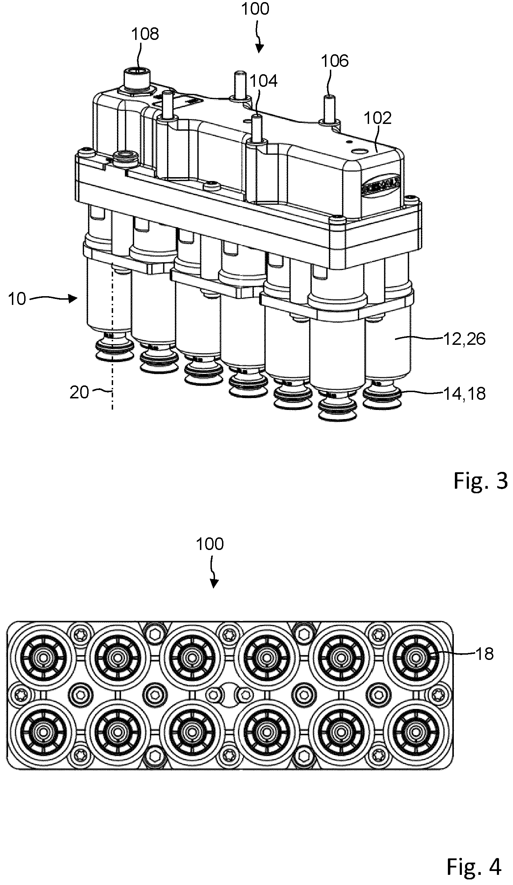

Die Figur 3 zeigt in skizzierter Darstellung eine Ausgestaltung eines Greifmoduls, welches insgesamt mit dem Bezugszeichen 100 bezeichnet ist. Das Greifmodul umfasst eine Mehrzahl, im dargestellten Beispiel 12, der vorstehend beschriebenen Sauggreifer 10. Die Sauggreifer 10 sind an einem Modulkörper 102 derart gehaltert, dass die Hubachsen 20 der Sauggreifer 10 zueinander parallel verlaufen.

Wie vorstehend erwähnt, kann das Greifmodul 100 außerdem eine oder mehrere Ventileinrichtungen (nicht dargestellt) zur Steuerung einer Druckluftversorgung und/oder eine oder mehrere Ventileinrichtungen zur Steuerung einer Unterdruckversorgung der Sauggreifer 10 umfassen. Beispielhaft kann das Greifmodul 100 an dem Modulkörper 102 einen oder mehrere Hauptüberdruckanschlüsse 104 und/oder einen oder mehrere Hauptunterdruckanschluss 106 aufweisen, über welche das Greifmodul 100 mit Überdruck oder Unterdruck versorgbar ist.

Wie in Figur 3 schematisch dargestellt, umfasst das Greifmodul 100 beispielhaft eine elektrische Schnittstelle 108, über welche bspw. die Ventileinrichtungen mit Strom versorgbar sind. Darüber hinaus ist es denkbar, dass über die elektrische Schnittstelle 108 Steuerbefehle von einer übergeordneten Steuereinrichtung an die Ventileinrichtungen übertragen werden.

Wie vorstehend erwähnt, kann das Greifmodul 100 zusätzlich eine eigene Steuereinrichtung (nicht dargestellt) zur Ansteuerung der Ventileinrichtungen umfassen. Dann kann die elektrische Schnittstelle 108 bspw. dazu ausgebildet sein, um die integrierte Steuereinrichtung mit einer übergeordneten Steuereinrichtung zu verbinden

Die Figur 4 zeigt das Greifmodul 100 gemäß Figur 3 in einer Untersicht. Wie aus Figur 4 ersichtlich, sind in dem dargestellten Beispiel die Sauggreifer 10 in einem regelmäßigen Raster angeordnet. Bei nicht dargestellten Ausgestaltungen ist es auch denkbar, dass die Sauggreifer 10 unregelmäßig angeordnet sind.

Bei der dargestellten Ausgestaltung sind zudem alle Saugkörper 18 identisch ausgebildet, weisen insbesondere denselben Durchmesser auf. Bei nicht dargestellten Ausgestaltungen ist es aber auch denkbar, dass an einem Greifmodul 100 Sauggreifer 10 mit unterschiedlich ausgebildeten Saugkörpern 18, insbesondere Saugkörpern 18 unterschiedlichen Durchmessers, vorgesehen sind.

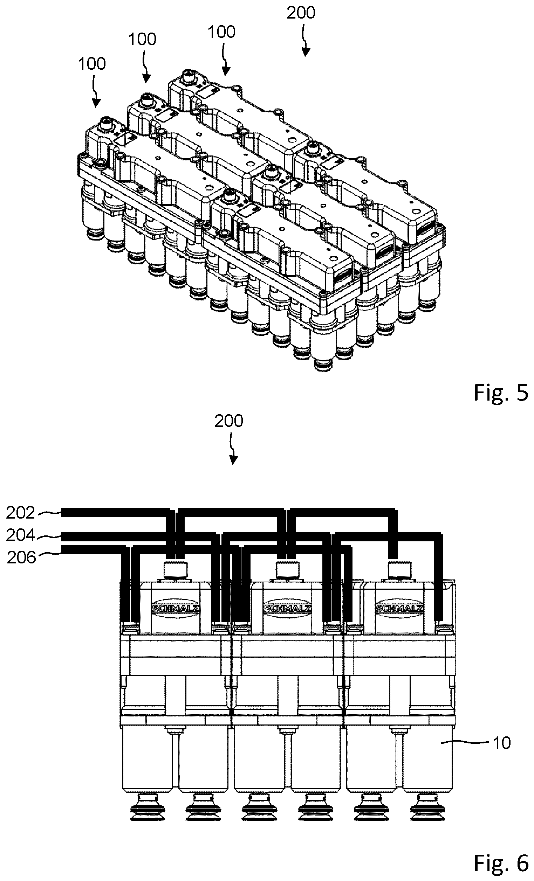

Es ist auch denkbar, dass mehrere der vorstehend beschriebenen Greifmodule 100 zu einer übergeordneten Sauggreifvorrichtung zusammengefasst sind. Eine beispielhafte Ausgestaltung einer solchen Sauggreifvorrichtung ist in Figur 5 dargestellt und insgesamt mit dem Bezugszeichen 200 versehen. Wie aus Figur 5 ersichtlich, sind die Greifmodule 100 in der Sauggreifvorrichtung 200 insbesondere derart nebeneinander angeordnet, dass eine ebene Saugfläche gebildet ist.

Wie in Figur 6 schematisch dargestellt, ist es denkbar, dass die Sauggreifvorrichtung 200 über eine elektrische Versorgungsleitung 202, eine Druckluftversorgungsleitung 204 und eine Unterdruckversorgungsleitung 206 versorgt ist.

## Patentansprüche

1. Sauggreifer (10) zum Ansaugen und Handhaben eines Gegenstands, umfassend
- einen Greifergrundkörper (12) mit einem Gehäuse (26), welches einen Unterdruckanschluss (50) aufweist,
- eine Saugereinheit (14), umfassend einen Hubkolben (16) und einen mit dem Hubkolben (16) bewegungsgekoppelten Saugkörper (18),
wobei die Saugereinheit (14) an dem Greifergrundkörper (12) entlang einer Hubachse (20) derart verlagerbar gehaltert ist, dass sie in einer Ausfahrrichtung (22) und einer zu der Ausfahrrichtung (22) entgegengesetzten Einfahrrichtung (24) relativ zu dem Greifergrundkörper (12) verstellbar ist, wobei die Saugereinheit (14) eine axial eingefahrene Passivkonfiguration und eine axial ausgefahrene Aktivkonfiguration einnehmen kann, wobei in der Aktivkonfiguration eine Strömungsverbindung zwischen dem Unterdruckanschluss (50) und dem Saugkörper (18) hergestellt ist und in der Passivkonfiguration diese Strömungsverbindung abgesperrt ist,
wobei das Gehäuse (26) einen Gehäuseinnenraum (28) aufweist, in dem der Hubkolben (16) entlang der Hubachse (20) verlagerbar geführt ist,
wobei der Hubkolben (16) den Gehäuseinnenraum (28) in eine erste Unterdruckkammer (34) und eine zweite Unterdruckkammer (36) unterteilt, wobei die erste Unterdruckkammer (34) und die zweite Unterdruckkammer (36) durch Veränderung einer Verschiebestellung des Hubkolbens (16) entlang der Hubachse (20) in ihrer Größe veränderbar sind, **dadurch gekennzeichnet, dass** der Hubkolben (16) eine innenliegende Unterdruckführung (54) aufweist, über welche die erste Unterdruckkammer (34) und die zweite Unterdruckkammer (36) miteinander strömungsverbunden sind, wobei in der Aktivkonfiguration eine Strömungsverbindung zwischen den beiden Unterdruckkammern (34, 36) und dem Unterdruckanschluss (50) hergestellt ist und in der Passivkonfiguration diese Strömungsverbindung abgesperrt ist, wobei der Hubkolben (16) und die beiden Unterdruckkammern (34, 36) derart ausgebildet sind, dass durch Beaufschlagen der beiden Unterdruckkammern (34, 36) mit Unterdruck eine Kraft auf den Hubkolben (16) in Ausfahrrichtung (22) wirkt.

2. Sauggreifer (10) nach Anspruch 1, wobei die erste Unterdruckkammer (34) und die zweite Unterdruckkammer (36) abschnittsweise durch Flächenabschnitte (72, 76) des Hubkolbens (16) begrenzt sind, auf welche ein in den beiden Unterdruckkammern (34, 36) vorherrschender Unterdruck wirkt, wobei erste Flächenabschnitte (72) vorgesehen sind, welche derart orientiert sind, dass durch Einwirken eines in den Unterdruckkammern (34, 36) vorherrschenden Unterdrucks auf die ersten Flächenabschnitte (72) eine Kraft auf den Hubkolben (16) in Ausfahrrichtung (22) wird, und wobei zweite Flächenabschnitte (76) vorgesehen sind, welche derart orientiert sind, dass durch Einwirken des in den Unterdruckkammern vorherrschenden Unterdrucks auf die zweiten Flächenabschnitte (76) eine Kraft auf den Hubkolben (16) in Einfahrrichtung (24) wirkt, wobei eine Summe aller ersten Flächenabschnitte (72) größer ist als eine Summe aller zweiten Flächenabschnitte (76).

3. Sauggreifer (10) nach einem der vorherigen Ansprüche, wobei die erste Unterdruckkammer (34) und die zweite Unterdruckkammer (36) derart ausgebildet sind, dass beim Überführen der Saugereinheit (14) aus der Passivkonfiguration in die Aktivkonfiguration sich die erste Unterdruckkammer (34) vergrößert und sich die zweite Unterdruckkammer (36) verkleinert.

4. Sauggreifer (10) nach einem der vorherigen Ansprüche, wobei die erste Unterdruckkammer (34) zumindest abschnittsweise axial versetzt zu dem Hubkolben (16) angeordnet ist, insbesondere zwischen einem dem Saugkörper (18) gegenüberliegenden Ende des Hubkolbens (16) und einer Gehäuseinnenwandung des Gehäuses (26).

5. Sauggreifer (10) nach einem der vorherigen Ansprüche, wobei die Unterdruckführung (54) des Hubkolbens (16) eine, insbesondere axiale, Saugöffnung (60) aufweist, welche mit dem Saugkörper (18) strömungsverbunden ist.

6. Sauggreifer (10) nach einem der vorherigen Ansprüche, wobei die erste Unterdruckkammer (34) eine Kammeröffnung (52) aufweist, welche mit dem Unterdruckanschluss (50) strömungsverbunden ist, wobei die Kammeröffnung (52) in der Passivkonfiguration der Saugereinheit (14) durch den Hubkolben (16), insbesondere durch eine an einem dem Saugkörper (18) gegenüberliegenden Ende des Hubkolbens (16) angeordnete Dichteinrichtung (64) des Hubkolbens (16), verschlossen ist und durch Verlagerung des Hubkolbens (16) aus der Passivstellung in Ausfahrrichtung (22) öffenbar ist.

7. Sauggreifer (10) nach einem der vorherigen Ansprüche, wobei die Saugereinheit (14) in die Passivstellung beaufschlagt, insbesondere federbeaufschlagt, ist.

8. Sauggreifer (10) nach einem der vorherigen Ansprüche, wobei das Gehäuse (26) einen Überdruckanschluss (66) aufweist, wobei der Hubkolben (16) in dem Gehäuseinnenraum (28) derart vorgesehen ist, dass, insbesondere zwischen der ersten Unterdruckkammer (34) und der zweiten Unterdruckkammer (36), eine Überdruckkammer (38) ausgebildet ist, welche mit dem Überdruckanschluss (66) strömungsverbunden ist, wobei die Überdruckkammer (38) derart ausgebildet ist, dass der Hubkolben (16) durch Beaufschlagung der Überdruckkammer (38) mit Druckluft in Ausfahrrichtung (22) verlagerbar ist.

9. Sauggreifer (10) nach dem vorherigen Anspruch, wobei die Überdruckkammer (38) zwischen der ersten Unterdruckkammer (34) und der zweiten Unterdruckkammer (36) angeordnet ist, wobei der Hubkolben (16) eine erste Dichteinrichtung (40) umfasst, welche dazu ausgebildet ist, die erste Unterdruckkammer (34) gegen die Überdruckkammer (38) abzudichten, und eine zweite Dichteinrichtung (44), welche dazu ausgebildet ist, die Überdruckkammer (38) gegen die zweite Unterdruckkammer (36) abzudichten.

10. Sauggreifer (10) nach einem der vorherigen Ansprüche, wobei das Gehäuse (26) einen ersten Gehäuseinnenraumabschnitt (30) und einen, insbesondere in Ausfahrrichtung (11) axial dahinter angeordneten, zweiten Gehäuseinnenraumabschnitt (32) aufweist, wobei die erste Unterdruckkammer (34) in dem ersten Gehäuseinnenraumabschnitt (30) ausgebildet ist und wobei die zweite Unterdruckkammer (36) und insbesondere die Überdruckkammer (38) in dem zweiten Gehäuseinnenraumabschnitt (32) ausgebildet ist.

11. Sauggreifer (10) nach dem vorherigen Anspruch, wobei entlang der Hubachse (20) betrachtet eine Querschnittsfläche des ersten Gehäuseinnenraumabschnitts (30) kleiner ist als eine Querschnittsfläche des zweiten Gehäuseinnraumabschnitts (32).

12. Sauggreifer (10) nach einem der Ansprüche 10 oder 11 bei Rückbezug auf Anspruch 8, wobei der Hubkolben (16) in dem zweiten Gehäuseabschnitt (32) eine radiale Auskragung (42) aufweist, welche den zweiten Gehäuseinnenraumabschnitt (32) in die zweite Unterdruckkammer (36) und die Überdruckkammer (38) unterteilt.

13. Sauggreifer (10) nach einem der vorherigen Ansprüche, wobei die zweite Unterdruckkammer (36) und insbesondere die Überdruckkammer (38) den Hubkolben (16) umschließen.

14. Greifmodul (100), umfassend einen Modulkörper (102) und eine Mehrzahl von Sauggreifern (10) nach einem der vorherigen Ansprüche, wobei die Sauggreifer (10) derart an dem Modulkörper (102) gehaltert sind, dass die Hubachsen (20) der Sauggreifer (10) zueinander parallel verlaufen.

15. Sauggreifvorrichtung (200), umfassend eine Mehrzahl von Greifmodulen (100) nach dem vorherigen Anspruch.

## Claims

1. Suction gripper (10) for suctioning and handling an object, comprising
- a gripper main body (12) having a housing (26) which has a vacuum connection point (50),
- a suction unit (14) comprising a reciprocating piston (16) and a suction body (18) which is coupled to the reciprocating piston (16) in a manner that allows it to move,
the suction unit (14) being movably mounted on the gripper main body (12) along a stroke axis (20) such that the unit is adjustable relative to the gripper main body (12) in an extension direction (22) and a retraction direction (24) opposite to the extension direction (22), the suction unit (14) being able to assume an axially retracted passive configuration and an axially extended active configuration, a flow connection being established between the vacuum connection point (50) and the suction body (18) in the active configuration and this flow connection being closed off in the passive configuration,
the housing (26) having a housing interior (28) in which the reciprocating piston (16) is movably guided along the stroke axis (20), the reciprocating piston (16) dividing the housing interior (28) into a first vacuum chamber (34) and a second vacuum chamber (36), it being possible for the first vacuum chamber (34) and the second vacuum chamber (36) to be changed in size by changing a displacement position of the reciprocating piston (16) along the stroke axis (20),
**characterized in that** the reciprocating piston (16) has an internal vacuum guide (54) via which the first vacuum chamber (34) and the second vacuum chamber (36) are flow-connected, a flow connection being established between the two vacuum chambers (34, 36) and the vacuum connection point (50) in the active configuration and this flow connection being closed off in the passive configuration, the reciprocating piston (16) and the two vacuum chambers (34, 36) being designed such that by applying a vacuum to the two vacuum chambers (34, 36), a force acts on the reciprocating piston (16) in the extension direction (22).

2. Suction gripper (10) according to claim 1, wherein the first vacuum chamber (34) and the second vacuum chamber (36) are delimited, at least in some portions, by surface portions (72, 76) of the reciprocating piston (16), on which surface portions a vacuum prevailing in the two vacuum chambers (34, 36) acts, wherein first surface portions (72) are provided which are oriented such that the action of a vacuum prevailing in the vacuum chambers (34, 36) on the first surface portions (72) is a force on the reciprocating piston (16) in the extension direction (22), and wherein second surface portions (76) are provided which are oriented such that the action of the vacuum prevailing in the vacuum chambers on the second surface portions (76) exerts a force on the reciprocating piston (16) in the retraction direction (24), wherein a sum of all the first surface portions (72) is greater than a sum of all the second surface portions (76).

3. Suction gripper (10) according to either of the preceding claims, wherein the first vacuum chamber (34) and the second vacuum chamber (36) are designed such that when the suction unit (14) is transferred from the passive configuration to the active configuration, the first vacuum chamber (34) increases in size and the second vacuum chamber (36) decreases in size.

4. Suction gripper (10) according to any of the preceding claims, wherein the first vacuum chamber (34) is arranged, at least in some portions, axially offset with respect to the reciprocating piston (16), in particular between an end of the reciprocating piston (16) opposite the suction body (18) and an inner wall of the housing (26).

5. Suction gripper (10) according to any of the preceding claims, wherein the vacuum guide (54) of the reciprocating piston (16) has a suction opening (60), in particular an axial suction opening, which is flow-connected to the suction body (18).

6. Suction gripper (10) according to any of the preceding claims, wherein the first vacuum chamber (34) has a chamber opening (52) which is flow-connected to the vacuum connection point (50), wherein the chamber opening (52), in the passive configuration of the suction unit (14), is closed by the reciprocating piston (16), in particular by a sealing apparatus (64) of the reciprocating piston (16) arranged at an end of the reciprocating piston (16) opposite the suction body (18), and can be opened by moving the reciprocating piston (16) from the passive position in the extension direction (22).

7. Suction gripper (10) according to any of the preceding claims, wherein the suction unit (14) is loaded, in particular spring-loaded, in the passive position.

8. Suction gripper (10) according to any of the preceding claims, wherein the housing (26) has a pressure relief connection point (66), wherein the reciprocating piston (16) is provided in the housing interior (28) such that, in particular between the first vacuum chamber (34) and the second vacuum chamber (36), a pressure relief chamber (38) is formed which is flow-connected to the pressure relief connection point (66), wherein the pressure relief chamber (38) is designed such that the reciprocating piston (16) can be moved in the extension direction (22) by pressurizing the pressure relief chamber (38).

9. Suction gripper (10) according to the previous claim, wherein the pressure relief chamber (38) is arranged between the first vacuum chamber (34) and the second vacuum chamber (36), wherein the reciprocating piston (16) comprises a first sealing apparatus (40) which is configured to seal the first vacuum chamber (34) against the pressure relief chamber (38), and a second sealing apparatus (44) which is configured to seal the pressure relief chamber (38) against the second vacuum chamber (36).

10. Suction gripper (10) according to any of the preceding claims, wherein the housing (26) has a first housing interior portion (30) and a second housing interior portion (32) which is arranged axially behind it, in particular in the extension direction (11), wherein the first vacuum chamber (34) is formed in the first housing interior portion (30) and wherein the second vacuum chamber (36) and in particular the pressure relief chamber (38) are formed in the second housing interior portion (32).

11. Suction gripper (10) according to the preceding claim, wherein a cross-sectional area of the first housing interior portion (30), viewed along the stroke axis (20), is smaller than a cross-sectional area of the second housing interior portion (32).

12. Suction gripper (10) according to claim 10 or 11 with reference to claim 8, wherein the reciprocating piston (16) in the second housing portion (32) has a radial projection (42) which divides the second housing interior portion (32) into the second vacuum chamber (36) and the pressure relief chamber (38).

13. Suction gripper (10) according to any of the preceding claims, wherein the second vacuum chamber (36) and in particular the pressure relief chamber (38) enclose the reciprocating piston (16).

14. Gripping module (100) comprising a module body (102) and a plurality of suction grippers (10) according to any of the preceding claims, wherein the suction grippers (10) are mounted on the module body (102) such that the stroke axes (20) of the suction grippers (10) extend in parallel with one another.

15. Suction gripping device (200) comprising a plurality of gripping modules (100) according to the preceding claim.

## Revendications

1. Dispositif de préhension par aspiration (10) pour l'aspiration et la manipulation d'un objet, comprenant
- un corps de base de dispositif de préhension (12) comportant un boîtier (26) qui présente un raccord de dépression (50),
- une unité d'aspiration (14), comprenant un piston à mouvement alternatif (16) et un corps d'aspiration (18) accouplé en déplacement avec le piston à mouvement alternatif (16),
dans lequel l'unité d'aspiration (14) est maintenue sur le corps de base de dispositif de préhension (12) de manière à pouvoir être déplacée le long d'un axe de levage (20) de telle sorte qu'elle peut être réglée par rapport au corps de base de dispositif de préhension (12) dans une direction de sortie (22) et dans une direction d'insertion (24) opposée à la direction de sortie (22), dans lequel l'unité d'aspiration (14) peut prendre une configuration passive insérée axialement et une configuration active sortie axialement, dans lequel une liaison par écoulement est établie entre le raccord de dépression (50) et le corps d'aspiration (18) dans la configuration active et ladite liaison par écoulement est bloquée dans la configuration passive,
dans lequel le boîtier (26) présente un espace intérieur de boîtier (28) dans lequel le piston à mouvement alternatif (16) est guidé de manière à pouvoir être déplacé le long de l'axe de levage (20), dans lequel le piston à mouvement alternatif (16) divise l'espace intérieur de boîtier (28) en une première chambre à dépression (34) et en une seconde chambre à dépression (36), dans lequel la première chambre à dépression (34) et la seconde chambre à dépression (36) peuvent être modifiées en termes de taille en modifiant une position de coulissement du piston à mouvement alternatif (16) le long de l'axe de levage (20),
**caractérisé en ce que** le piston à mouvement alternatif (16) présente un guide de dépression (54) intérieur par l'intermédiaire duquel la première chambre à dépression (34) et la seconde chambre à dépression (36) sont reliées entre elles par écoulement, dans lequel une liaison par écoulement est établie entre les deux chambres à dépression (34, 36) et le raccord de dépression (50) dans la configuration active et ladite liaison par écoulement est bloquée dans la configuration passive, dans lequel le piston à mouvement alternatif (16) et les deux chambres à dépression (34, 36) sont réalisés de telle sorte qu'en sollicitant les deux chambres à dépression (34, 36) par une dépression, une force agit sur le piston à mouvement alternatif (16) dans la direction de sortie (22).

2. Dispositif de préhension par aspiration (10) selon la revendication 1, dans lequel la première chambre à dépression (34) et la seconde chambre à dépression (36) sont délimitées dans certaines sections par des sections de surface (72, 76) du piston à mouvement alternatif (16), sur lesquelles agit une dépression régnant dans les deux chambres à dépression (34, 36), dans lequel des premières sections de surface (72) sont prévues, lesquelles sont orientées de telle sorte que, par l'action d'une dépression régnant dans les chambres à dépression (34, 36) sur les premières sections de surface (72), une force est sur le piston à mouvement alternatif (16) dans la direction de sortie (22), et dans lequel des secondes sections de surface (76) sont prévues, lesquelles sont orientées de telle sorte que, par l'action de la dépression régnant dans les chambres à dépression sur les secondes sections de surface (76), une force agit sur le piston à mouvement alternatif (16) dans la direction d'insertion (24), dans lequel une somme de toutes les premières sections de surface (72) est supérieure à une somme de toutes les secondes sections de surface (76).

3. Dispositif de préhension par aspiration (10) selon l'une des revendications précédentes, dans lequel la première chambre à dépression (34) et la seconde chambre à dépression (36) sont réalisées de telle sorte que, lorsque l'unité d'aspiration (14) passe de la configuration passive à la configuration active, la première chambre à dépression (34) s'agrandit et la seconde chambre à dépression (36) rétrécit.

4. Dispositif de préhension par aspiration (10) selon l'une des revendications précédentes, dans lequel la première chambre à dépression (34) est disposée, au moins dans certaines sections, de manière à être décalée axialement par rapport au piston à mouvement alternatif (16), en particulier entre une extrémité du piston à mouvement alternatif (16) opposée au corps d'aspiration (18) et une paroi intérieure de boîtier du boîtier (26).

5. Dispositif de préhension par aspiration (10) selon l'une des revendications précédentes, dans lequel le guide de dépression (54) du piston à mouvement alternatif (16) présente une ouverture d'aspiration (60), en particulier axiale, qui est reliée par écoulement au corps d'aspiration (18).

6. Dispositif de préhension par aspiration (10) selon l'une des revendications précédentes, dans lequel la première chambre à dépression (34) présente une ouverture de chambre (52) qui est reliée par écoulement au raccord de dépression (50), dans lequel l'ouverture de chambre (52) est, dans la configuration passive de l'unité d'aspiration (14), fermée par le piston à mouvement alternatif (16), en particulier par un moyen d'étanchéité (64) du piston à mouvement alternatif (16), lequel moyen d'étanchéité est disposé à une extrémité du piston à mouvement alternatif (16) opposée au corps d'aspiration (18), et peut être ouverte par le déplacement du piston à mouvement alternatif (16) hors de la position passive dans la direction de sortie (22).

7. Dispositif de préhension par aspiration (10) selon l'une des revendications précédentes, dans lequel l'unité d'aspiration (14) est sollicitée, en particulier est sollicitée de manière élastique, dans la position passive.

8. Dispositif de préhension par aspiration (10) selon l'une des revendications précédentes, dans lequel le boîtier (26) présente un raccord de surpression (66), dans lequel le piston à mouvement alternatif (16) est prévu dans l'espace intérieur de boîtier (28) de telle sorte que, en particulier entre la première chambre à dépression (34) et la seconde chambre à dépression (36), une chambre à surpression (38) est réalisée, laquelle est reliée par écoulement au raccord de surpression (66), dans lequel la chambre à surpression (38) est réalisée de telle sorte que le piston à mouvement alternatif (16) peut être déplacé dans la direction de sortie (22) par sollicitation de la chambre à surpression (38) par de l'air comprimé.

9. Dispositif de préhension par aspiration (10) selon la revendication précédente, dans lequel la chambre à surpression (38) est disposée entre la première chambre à dépression (34) et la seconde chambre à dépression (36), dans lequel le piston à mouvement alternatif (16) comprend un premier moyen d'étanchéité (40) qui est réalisé pour rendre étanche la première chambre à dépression (34) par rapport à la chambre à surpression (38), et un second moyen d'étanchéité (44) qui est réalisé pour rendre étanche la chambre à surpression (38) par rapport à la seconde chambre à dépression (36).

10. Dispositif de préhension par aspiration (10) selon l'une des revendications précédentes, dans lequel le boîtier (26) présente une première section d'espace intérieur de boîtier (30) et une seconde section d'espace intérieur de boîtier (32), disposée en particulier axialement derrière celle-ci dans la direction de sortie (11), dans lequel la première chambre à dépression (34) est réalisée dans la première section d'espace intérieur de boîtier (30) et dans lequel la seconde chambre à dépression (36) et en particulier la chambre à surpression (38) sont réalisées dans la seconde section d'espace intérieur de boîtier (32).

11. Dispositif de préhension par aspiration (10) selon la revendication précédente, dans lequel, vue le long de l'axe de levage (20), une surface de section transversale de la première section d'espace intérieur de boîtier (30) est inférieure à une surface de section transversale de la seconde section d'espace intérieur de boîtier (32).

12. Dispositif de préhension par aspiration (10) selon l'une des revendications 10 ou 11 en référence à la revendication 8, dans lequel le piston à mouvement alternatif (16) présente, dans la seconde section de boîtier (32), une saillie radiale (42) qui divise la seconde section d'espace intérieur de boîtier (32) en la seconde chambre à dépression (36) et la chambre à surpression (38).

13. Dispositif de préhension par aspiration (10) selon l'une des revendications précédentes, dans lequel la seconde chambre à dépression (36) et en particulier la chambre à surpression (38) entourent le piston à mouvement alternatif (16).

14. Module de préhension (100), comprenant un corps de module (102) et une pluralité de dispositifs de préhension par aspiration (10) selon l'une des revendications précédentes, dans lequel les dispositifs de préhension par aspiration (10) sont maintenus sur le corps de module (102) de telle sorte que les axes de levage (20) des dispositifs de préhension par aspiration (10) s'étendent parallèlement les uns aux autres.

15. Dispositif de préhension par aspiration (200), comprenant une pluralité de modules de préhension (100) selon la revendication précédente.
